# EUROPÄISCHE PATENTANMELDUNG

(11) **EP 1 464 853 A1**
(43) Veröffentlichungstag der Anmeldung: **06.10.2004**
(21) Anmeldenummer: 03007694.7
(22) Anmeldetag: 03.04.2003
(51) Int. Cl.: F16B 39/32

(54) **Selbstsichernde Befestigungsvorrichtung**

(71) Anmelder: SIEMENS AKTIENGESELLSCHAFT, 80333 München (DE)
(72) Erfinder: Tiemann, Peter, 58452 Witten (DE)

(57) **Zusammenfassung**

Zur zuverlässigen Befestigung einer Brennkammerinnenverkleidung (20) an der Brennkammerinnenwand (19) ist eine selbstsichernde Befestigungsvorrichtung mit einer Buchse (2) und einer in die Buchse (2) eindrehbaren Schraube (3) mit einem mehrstufig sich erweiternden, insbesondere konusförmigem Schraubenkopf (4) angegeben, dadurch gekennzeichnet, dass sich die Schraube (3) bei Drehung in einer der beiden Drehrichtungen in der Buchse (2) verkrallt.

## Beschreibung

Die Erfindung betrifft eine selbstsichernde Befestigungsvorrichtung mit einem schraubbaren Befestigungselement.

Eine Befestigungsvorrichtung mit einem schraubbaren Befestigungselement, beispielsweise einer Schraube oder einer Mutter, ist häufig mit einer Losdrehsicherung ausgerüstet. Um das Losdrehen des schraubbaren Befestigungselementes zu verhindern, werden häufig mitverspannte Befestigungselemente wie Tellerfedern oder Spannscheiben verwendet. Des Weiteren werden als Sicherung gegen Losdrehen sowie als Verliersicherung oft formschlüssige Elemente wie Kronenmuttern, Schrauben mit Splintloch sowie Scheiben mit Außennase verwendet. Als Losdrehsicherung werden ferner auch sperrende Elemente wie .Sperrzahnschrauben und Sperrzahnmuttern verwendet. Als klemmende Elemente sind beispielsweise Muttern mit Kunststoffeinsatz sowie Schrauben mit Kunststoffbeschichtung im Gewinde üblicherweise im Einsatz. Hierbei ist jedoch die Temperaturabhängigkeit der Sicherungswirkung dieser Befestigungselemente zu beachten.

Bei Anwendungen mit besonders hohen Zuverlässigkeitsanforderungen sind häufig mehrere Sicherungsmaßnahmen gegen Losdrehen von Befestigungselementen gleichzeitig realisiert. Ein Beispiel für derartige Anwendungen ist die Befestigung einer Brennkammerinnenverkleidung in einer Gasturbine bzw. der aus strömungstechnischen Gründen erforderliche Verschluss der zylindrischen Tasche, in der die die Brennkammerinnenverkleidung befestigende Schraube angebracht sein kann. Als Befestigungs- oder Verschlusselemente können hier beispielsweise Tellerfederpaket, Gegensicherung und angegossene Hakensperre verwendet werden. Die Summe der insgesamt eingesetzten Teile bedingt in diesem Falle einen hohen fertigungstechnischen Aufwand.

Eine Einsparung von Teilen ist grundsätzlich durch selbstsichernde Schraubenelemente möglich. Beispielsweise kann, wie aus der DE 40 34 445 A1 bekannt, eine einstückig gefertigte Schraubenmutter an einem Ende oval verpresst sein. Dieses Befestigungselement wird jedoch nicht allen beispielsweise beim Gasturbinenbau gestellten Belastungs- und Zuverlässigkeitsanforderungen gerecht. Zudem ist es nachteilig, dass aufgrund der Deformation des Gewindes der Mutter auch deren Außenform von der Symmetrieform abweicht. Dadurch kann es problematisch sein, die Mutter mit einem üblichen Schraubenschlüssel festzuziehen oder zu lösen.

Der Erfindung liegt daher die Aufgabe zugrunde, eine selbstsichernde Befestigungsvorrichtung mit mindestens einem schraubbaren Befestigungselement anzugeben, die sich durch eine besonders zuverlässige Sicherung bei zugleich einfacher Betätigbarkeit auszeichnet.

Diese Aufgabe wird erfindungsgemäß gelöst durch eine selbstsichernde Befestigungsvorrichtung mit einer Buchse und einer in die Buchse eindrehbaren Schraube mit einem mehrstufig sich erweiternden Schraubenkopf, wobei sich die Schraube bei Drehung in einer der beiden Drehrichtungen in der Buchse verkrallt.

Die Erfindung geht dabei von der Überlegung aus, dass für eine besonders zuverlässige Sicherung gegen Losdrehen der Schraube auch bei gleichmäßig runder Form der Buchse eine selbstsichernde Befestigungsvorrichtung verwendet werden sollte, die auch im Bedarfsfall ein Lösen der Schraube ermöglicht. Dazu sollte eine Drehung der Schraube in eine der beiden Richtungen, nämlich das Losdrehen, so erschwert sein, dass ein versehentliches Lösen der Schraube sicher ausgeschlossen ist. Hierzu ist vorgesehen, dass sich die Schraube bei Drehung in einer der beiden Drehrichtungen in der Buchse zumindest teilweise lösbar verkrallt.

Für eine eine Losdrehsicherung bildende Verkrallung der Schraube in der Buchse ist die Schraube im Randbereich des Schraubenkopfes vorteilhafterweise mit einer Anzahl von Ausformungen ausgestattet, die sich bei Drehung in einer der beiden Drehrichtungen in der Buchse verkrallen und somit ein selbständiges Lösen der Schraube verhindern. In einer besonders vorteilhaften Ausgestaltung sind diese Ausformungen sägezahnförmig. Damit ist sichergestellt, dass sich die Schraube in einer Drehrichtung leicht betätigen lässt, in der anderen aber sicher sperrt. Darüber hinaus ist der Schraubenkopf mehrstufig mit einem sich entlang seiner Längsausrichtung erweiternden Querschnitt ausgebildet. Beispielsweise ist der Schraubenkopf konusförmig ausgebildet.

Zweckmäßigerweise weist die Buchse zur Aufnahme der Schraube einen mit einem Innengewinde versehenen Bereich und einen Verkrallungsbereich auf. In einer vorteilhaften Ausgestaltung sind beide Bereiche getrennt voneinander montierbar. Dadurch ist der Austausch lediglich des Verkrallungsbereiches bei Zerstörung durch zwanghaftes Losdrehen der Schraube erforderlich.

Vorteilhafterweise weist der Verkrallungsbereich der Buchse eine Anzahl von Sperrelementen auf, in denen sich die Schraube bei Drehung in einer der beiden Drehrichtungen verkrallt. Bevorzugt sind die Sperrelemente als mit den Ausformungen am Schraubenkopf korrespondierende Elemente ausgebildet. Die mit den Ausformungen am Schraubenkopf korrespondierenden Sperrelemente der Buchse stellen dabei eine besonders sichere Losdrehsicherung dar.

In einer zweckmäßigen Ausführungsform sind die Sperrelemente als schlitzförmige Ausnehmungen ausgeführt, die in der Wand der Buchse in Richtung einer die Schraube aufnehmenden Buchsenöffnung angeordnet sind. Diese als schlitzförmige Ausnehmungen ausgebildeten Sperrelemente sind somit zur Aufnahme der im Randbereich des Schraubenkopfes angebrachten, insbesondere sägezahnförmigen Ausformungen vorgesehen und stellen sicher, dass sich die Schraube in der Buchse besonders sicher verkrallen kann.

In einer alternativen Ausführungsform sind die Sperrelemente als in die Buchsenöffnung ragende Auswölbungen, insbesondere zapfenförmige Auswölbungen ausgeführt. Sie stellen wie die schlitzförmigen Ausnehmungen eine Losdrehsicherung für die Schraube dar, da sich bei Drehung in eine der beiden Drehrichtungen die Ausformungen am Schraubenkopf in den zapfenförmigen Auswölbungen der Buchsenöffnung verkrallen und auf diese Weise ein selbständiges Losdrehen der Schraube verhindern.

Die Anzahl der sägezahnförmigen Ausformungen am Schraubenkopf entspricht zweckmäßigerweise der Anzahl der Sperrelemente der Buchse. Hierdurch verteilt sich die Belastung beim Losdrehen der Schraube auf mehrere Punkte, wodurch die Verkrallung besonders belastbar und sicher ist.

Zur Vereinfachung der Fertigung von Schraube und Buchse ist es vorteilhaft, dass sowohl die Ausformungen am Schraubenkopf als auch die Sperrelemente der Buchse jeweils gleichmäßig voneinander beabstandet sind. Bei Verwendung der schlitzförmigen Ausnehmungen als Sperrelemente spreizt beim Eindrehen der Schraube in die Buchse der konusförmige Schraubenkopf die geschlitzte Wand der Buchse nach außen. Die Schraube kann dann nur noch unter Anwendung von Zwang losgedreht werden, wobei die Befestigungsvorrichtung durch die sich in den Schlitzen der Buchse verkrallenden Ausformungen der Schraube zerstört wird und ersetzt werden muss. Je nach Ausführung der Befestigungsvorrichtung, insbesondere der Buchse - ein- oder mehrteilig -, ist es bei einer mehrteiligen Ausführung ausreichend, den separaten und zerstörten Verkrallungsbereich auszutauschen; der das Innengewinde der Buchse bildende Bereich bleibt dabei erhalten.

Alternativ kann auch die Schraube mit einer Anzahl von schraubenseitigen Sperrelementen ausgestattet sein. Dies ist beispielsweise dann besonders vorteilhaft, wenn aus fertigungstechnischen Gründen die Anbringung von Sperrelementen an der Buchse selbst nicht wünschenswert ist. In einer vorteilhaften Ausgestaltung sind die an der Schraube angebrachten Sperrelemente jeweils als ein Hakenelement ausgeführt, wobei die Ausformungen bei ausreichend tiefem Eindrehen der Schraube in der Buchse einrasten und ein selbsttätiges Lösen der Schraube sicher verhindern.

Zusätzlich zu den Hakenelementen der Schraube und den Sperrelementen der Buchse oder alternativ dazu weist die Buchse einen exzentrischen Querschnitt auf. Nach dem Eindrehen ist die Schraube dann in der Buchse verklemmt und kann sich nicht selbsttätig lösen. Diese Losdrehsicherung ist besonders einfach und gleichzeitig sehr sicher. Ist ein exzentrischer Querschnitt der Buchse beispielsweise aus fertigungstechnischen Gründen nicht gewünscht, kann eine sichere Verklemmung der Schraube in der Buchse auch durch einen sich in Eindrehrichtung der Schraube verengenden Durchmesser der Buchse erzielt werden.

Um sicherzustellen, dass sich die Buchse beim Betätigen der Schraube nicht mitdreht, ist die Buchse zweckmäßigerweise mit einer Verdrehsicherung versehen. In einer vorteilhaften Ausgestaltung ist als Verdrehsicherung in der Außenwand der Buchse mindestens ein Ansatz vorgesehen, der sich in eine korrespondierende und in der Wandöffnung der Befestigungsvorrichtung angebrachte Ausnehmung einfügt und auf diese Weise ein Verdrehen der Buchse gegenüber der diese aufnehmenden Wandöffnung verhindert.

In einer weiteren alternativen Ausgestaltung umfasst die Verdrehsicherung eine Anzahl von in der Wandöffnung der Befestigungsvorrichtung angebrachten Ausnehmungen, z. B. nasenförmige Öffnungen in Form einer Außennase, und eine Anzahl von sich in diese nasenförmigen Öffnungen einfügenden Fortsätzen, insbesondere zacken- oder hakenförmigen Fortsätzen der Buchse. Die erwähnten Ausgestaltungen stellen besonders sichere und einfach zu fertigende Verdrehsicherungen der Befestigungsvorrichtung dar.

In einer weiteren, besonders einfachen Ausführungsform ist die Buchse als Bohrung in dem die Befestigungsvorrichtung aufnehmenden Teil, z. B. als Öffnung einer Wand in Art einer so genannten zylindrischen Tasche, ausgeführt, also kein separates Bauteil, was die Verwendung einer Verdrehsicherung unnötig macht.

In einer vorteilhaften Ausgestaltung ist die Schraube innen kühlbar. Beispielsweise kann hierzu eine Bohrung die Schraube sowie die Buchse axial durchdringen. Auf diese Weise kann z. B. ein Kühlmedium die Befestigungsvorrichtung durchströmen. Um einen Kühlmittelaustritt oder -eintritt aus dem bzw. in den Schraubenkopf längs der Schraubenachse zu verhindern, ist die Schraube vorzugsweise geschlossen kühlbar ausgeführt. Um eine effektive Kühlung zu gewährleisten, ist die Schraube an ihrem in die Buchse ragenden Ende vorteilhafterweise mit einer Verlängerung in der Art einer verlängerten Spitze versehen, die den Kühlmittelein- und -austritt erleichtert.

Die mit der Erfindung erzielten Vorteile bestehen insbesondere darin, dass die selbstsichernde Befestigungsvorrichtung durch die Verkrallung der Ausformungen des Schraubenkopfes in Sperrelementen der Buchse eine sehr zuverlässige Sicherung bei zugleich einfacher Betätigbarkeit erlaubt. Sie ist damit besonders geeignet für die Befestigung einer Brennkammerinnenverkleidung an einer Gasturbinenbrennkammer bzw. für den Verschluss der zylindrischen Tasche, in der die die Brennkammerinnenverkleidung befestigende Schraube angebracht sein kann.

Nachfolgend wird ein Ausführungsbeispiel der Erfindung anhand einer Zeichnung näher erläutert. Hierin zeigen:
- FIG 1: eine selbstsichernde Befestigungsvorrichtung mit einer Buchse und einer Schraube im gelösten Zustand,
- FIG 2: die Befestigungsvorrichtung nach FIG 1 im verbundenen Zustand,
- FIG 3: eine Gasturbine mit einer Gasturbinenbrennkammer mit einer Befestigungsvorrichtung nach FIG 1, 2, 4 bis 10, und
- FIG 4A bis FIG 10C: alternative Ausführungsformen einer Befestigungsvorrichtung.

Gleiche Teile sind in allen Figuren mit denselben Bezugszeichen versehen.

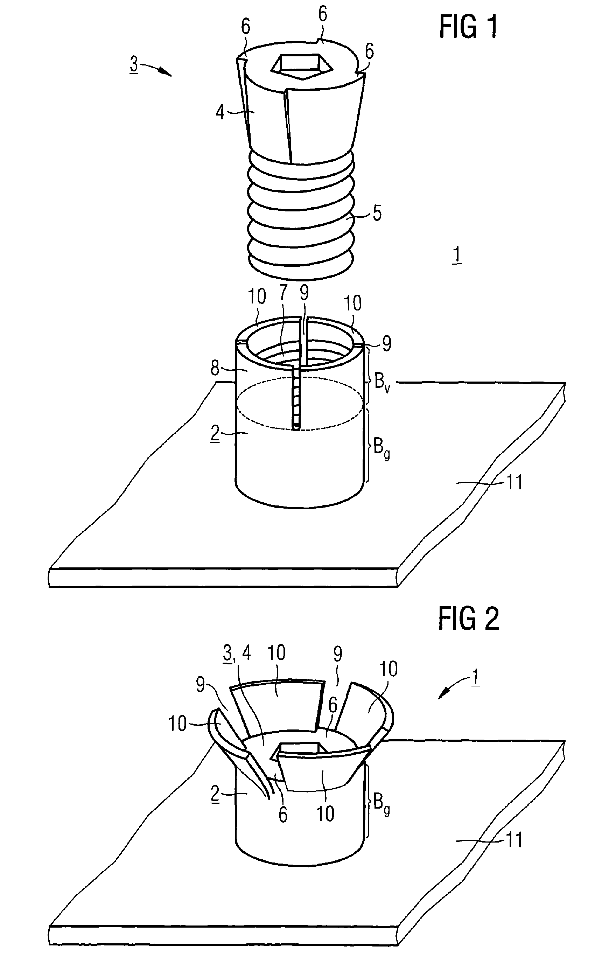

FIG 1 zeigt eine selbstsichernde Befestigungsvorrichtung 1 mit einer Buchse 2 und einer in diese eindrehbaren Schraube 3. Die Schraube 3 weist einen mehrstufigen oder sich erweiternden, z. B. konusförmigen Schraubenkopf 4 und ein Gewinde 5, beispielsweise ein Rechtsgewinde, auf. Im Randbereich des Schraubenkopfes 4 ist die Schraube 3 mit einer Anzahl von sägezahnartigen Ausformungen 6 versehen.

Die Buchse 2 weist in ihrem Innern ein Innengewinde 7 auf, das beispielsweise als Linksgewinde ausgeführt ist. Die Wand 8 der Buchse 2 ist mit einer Anzahl von Sperrelementen 9, z. B. mit schlitzförmigen Ausnehmungen versehen und wird durch die Sperrelemente 9 in einzelne Wandsegmente 10 unterteilt. Die Anzahl der schraubenseitigen Ausformungen 6 entspricht der Anzahl der buchsenseitigen Sperrelemente 9. Dabei sind sowohl die Ausformungen 6 als auch die Sperrelemente 9 jeweils in gleichmäßigem Abstand voneinander angeordnet. Dadurch haben alle Wandsegmente 10 dieselbe Breite. Eine der Buchse 2 zugeordnete Verdrehsicherung 11 stellt sicher, dass sich die Buchse 2 beim Betätigen der Schraube 3 nicht mitdrehen kann.

Je nach Art und Ausbildung der Buchse 2 kann diese ein- oder mehrteilig ausgebildet sein. Bei einer zweiteiligen Ausbildung ist die Buchse 2 - wie durch die gestrichelte Linie angedeutet - aus einem die Sperrelemente 9 aufweisenden Verkrallungsbereich Bv und einem mit dem Innengewinde 7 versehenen Bereich Bg gebildet. Dies ermöglicht bei Zerstörung eines der Bereiche - des Verkrallungsbereiches Bv und/oder des Bereiches Bg - einen separaten Austausch und somit einen einfachen Service sowie eine einfache Montage und/oder Demontage einzelner Elemente der Buchse 2.

FIG 2 zeigt dieselbe Befestigungsvorrichtung 1 im verbundenen Zustand. Dabei hat die Schraube 3 mit ihrem konusförmigen Schraubenkopf 4 beim Eindrehen in die Buchse 2 deren Wandsegmente 10 nach außen gespreizt. Die sägezahnartigen Ausformungen 6 verkrallen sich bei dem Versuch, die Schraube 3 loszudrehen, in den Sperrelementen 9. Bei Anwendung von Zwang wird die Befestigungsvorrichtung 1 zerstört und muss ersetzt werden.

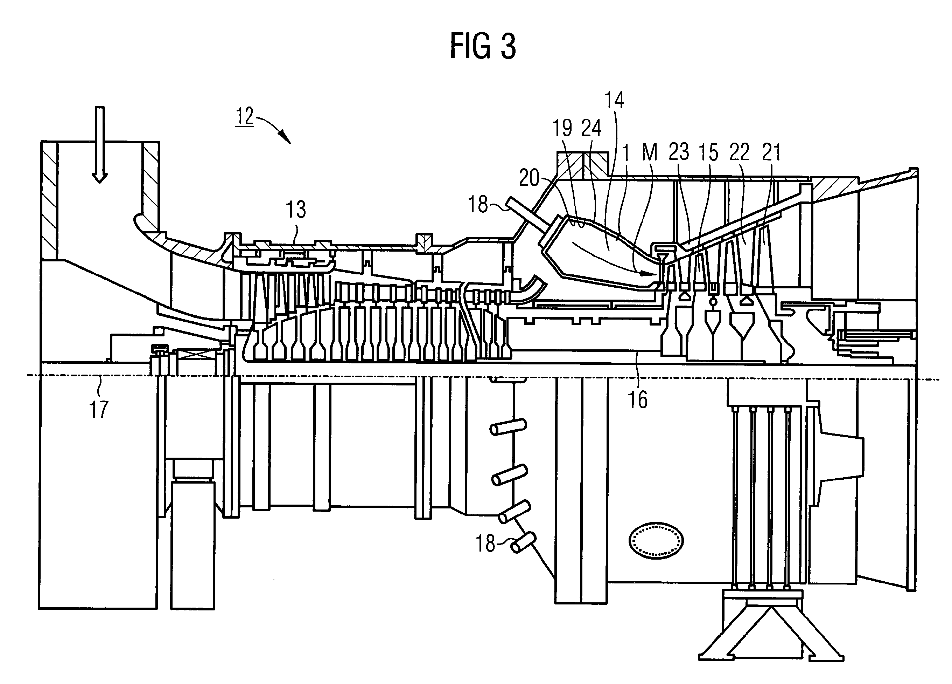

In FIG 3 ist schematisch im Querschnitt eine Gasturbine 12 dargestellt. Die Gasturbine 12 weist einen Verdichter 13 für Verbrennungsluft, eine Brennkammer 14 sowie eine Turbine 15 zum Antrieb des Verdichters 13 und eines nicht dargestellten Generators oder einer Arbeitsmaschine auf. Dazu sind die Turbine 15 und der Verdichter 13 auf einer gemeinsamen, auch als Turbinenläufer bezeichneten Turbinenwelle 16 angeordnet, mit der auch der Generator bzw. die Arbeitsmaschine verbunden ist, und die um die Mittelachse 17 drehbar gelagert ist. Die Brennkammer 14 ist mit einer Anzahl von Brennern 18 zur Verbrennung eines flüssigen oder gasförmigen Brennstoffs bestückt. Sie ist weiterhin an ihrer Innenwand 19 mit einer Brennkammerinnenverkleidung 20 ausgekleidet.

Die Turbine 15 weist eine Anzahl von mit der Turbinenwelle 16 verbundenen, rotierenden Laufschaufeln 21 auf. Die Laufschaufeln 21 sind kranzförmig an der Turbinenwelle 16 angeordnet und bilden somit eine Anzahl von Laufschaufelreihen. Weiterhin umfasst die Turbine 15 eine Anzahl von feststehenden Leitschaufeln 22, die ebenfalls kranzförmig unter Bildung von Leitschaufelreihen an einem Innengehäuse 23 der Turbine 15 befestigt sind. Die Laufschaufeln 21 dienen damit zum Antrieb der Turbinenwelle 16 durch Impulsübertrag vom die Turbine 15 durchströmenden Arbeitsmedium M. Die Leitschaufeln 22 dienen hingegen zur Strömungsführung des Arbeitsmediums M zwischen jeweils zwei in Strömungsrichtung des Arbeitsmediums M gesehen aufeinanderfolgenden Laufschaufelreihen oder Laufschaufelkränzen.

Um einen hohen Wirkungsgrad der Gasturbine 12 zu ermöglichen, wird die Gasturbine 12 mit einer hohen Temperatur des Arbeitsmediums M betrieben. Das Arbeitsmedium M tritt aus der Brennkammer 14 mit einer Temperatur von ca. 1200 °C bis 1300 °C aus. Die der Verbrennung zugeführte komprimierte Verbrennungsluft wird in einem Mantelraum 24, der zwischen der Innenwand 19 der Brennkammer 14 und der Brennkammerinnenverkleidung 20 gebildet ist, vor dem Eintritt in den Brenner 18 vorgewärmt. Dadurch wird gleichzeitig die Innenwand 19 der Brennkammer 14 gekühlt. Die selbstsichernde Befestigungsvorrichtung 1, die die Brennkammerinnenverkleidung 20 an der Innenwand 19 der Brennkammer 14 hält, ist unter diesen Betriebsbedingungen hohen mechanischen und thermischen Belastungen ausgesetzt.

Da die Sicherungswirkung der Befestigungsvorrichtung 1 temperaturunabhängig ist, ist die Befestigungsvorrichtung 1 besonders geeignet zur sicheren Befestigung der Brennkammerinnenverkleidung 20 an der Innenwand 19 bzw. zum Verschluss einer so genannten zylindrischen Tasche. Die zylindrische Tasche bildet dabei die Buchse 2, in der die die Brennkammerinnenverkleidung 20 befestigende Schraube 3 angebracht sein kann. Durch die selbstsichernde Ausbildung der Verbindung in Form einer Verkrallung zwischen der Schraube 3 und der Buchse 2 wird zuverlässig vermieden, dass sich die Schraube 3 aus ihrer Halterung löst und in die Brennkammer 14 gelangt, was gravierende Schäden in der Turbine 15 zur Folge hätte. Die geforderte sehr hohe Sicherheit der Befestigung der Brennkammerinnenverkleidung 20 an der Innenwand 19 der Brennkammer 14 ist mit der Befestigungsvorrichtung 1 mit geringem Fertigungs- und Montageaufwand erreicht.

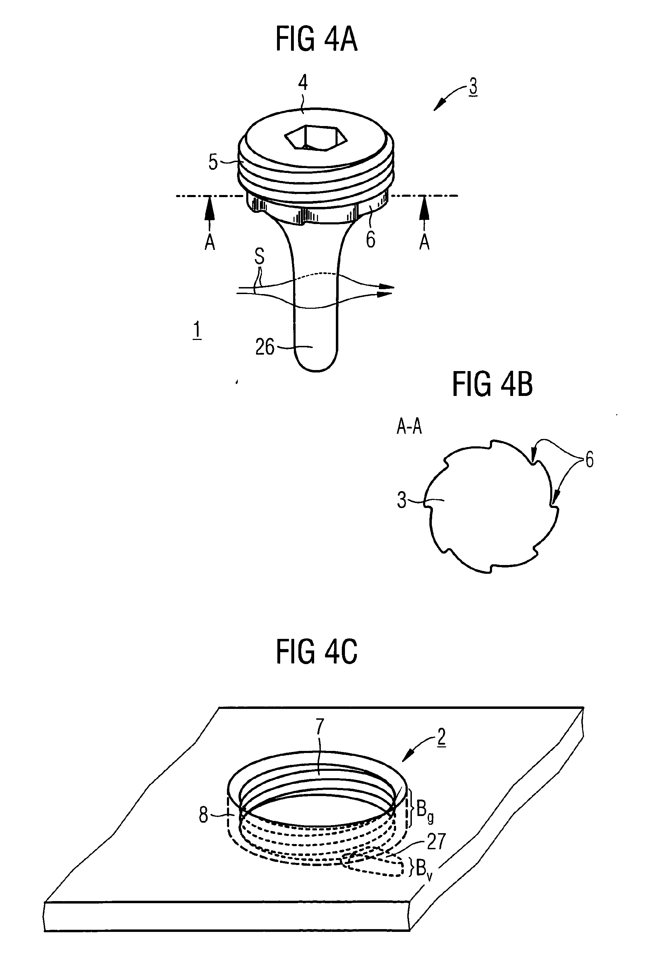

Eine alternative Ausgestaltung für eine Befestigungsvorrichtung 1 ist in den FIG 4A bis 4C dargestellt. In dieser Ausgestaltung kann die Schraube 3 - wie in FIG 4A durch die Pfeile S gezeigt - zur konvektiven Kühlung mit einer Verlängerung 26 in Form einer verlängerten Spitze ausgestattet sein, die eine bessere Zirkulation des Kühlmittels ermöglicht bzw. dessen Ein- und/oder Austritt erleichtert. Bei der in den FIG 4A bis 4C dargestellten Ausgestaltung der Schraube 3 sind die sägezahnartigen Ausformungen 6 unterhalb des Schraubenkopfes 4 und unterhalb des Schraubengewindes 5 angebracht. In der Wand 8 der Buchse 2 ist als buchsenseitiges Sperrelement 9 eine zapfenförmige, in die Öffnung der Buchse 2 zeigende Auswölbung 27 vorgesehen. Nach dem Eindrehen der Schraube 3 in die Buchse 2 kommt diese zapfenförmige nach innen weisende Auswölbung 27 zwischen den sägezahnartigen Ausformungen 6 der Schraube 3 zu liegen. Beim Zurückdrehen der Schraube 3 verkrallen sich die schraubenseitigen sägezahnartigen Ausformungen 6 an der buchsenseitigen zapfenförmigen Auswölbung 27 und die Schraube 3 sperrt sicher. Bedingt durch die unterhalb des Schraubenkopfes 4 und des Schraubengewindes 5 angeordneten sägezahnartigen Ausformungen 6 ist buchsenseitig der das Innengewinde 7 bildende Bereich Bg oberhalb des Verkrallungsbereiches Bv mit der als Sperrelement 9 ausgebildeten Auswölbung 27 angeordnet.

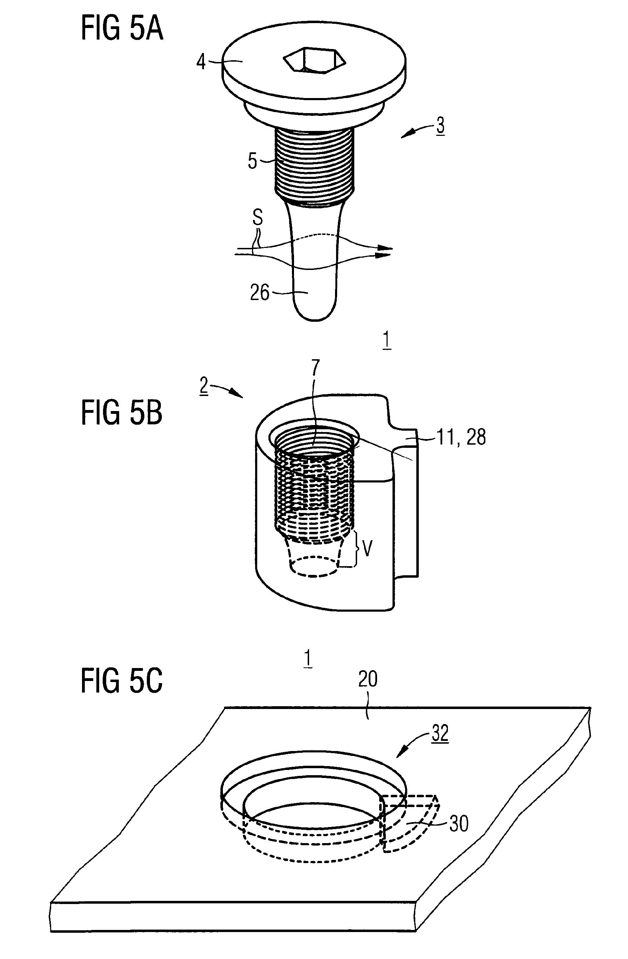

Die FIG 5A bis 5C zeigen eine alternative Ausgestaltung der Befestigungsvorrichtung 1. Die Schraube 3 ist hierbei - wie in FIG 5A anhand der Pfeile S gezeigt - zur konvektiven Kühlung mit einem Kühlmittel mit einer Verlängerung 26 versehen, welche beispielsweise den Ein- oder Austritt des Kühlmittels oder dessen Zirkulation innerhalb der Schraube 3 erleichtert. Die buchsenseitige Verdrehsicherung 11 besteht bei dieser Ausgestaltung in einem am Außenrand der Buchse 2 angebrachten Ansatz 28 in Art einer so genannten Außennase, der sich beim Einsetzen der Buchse 2 in einer korrespondierenden Ausnehmung 30 einer durch die Befestigungsvorrichtung 1 beispielsweise zu verschließenden Wandöffnung 32, z. B. einer zylindrischen Tasche, der Brennkammerinnenverkleidung 20 einfügt.

Als Losdrehsicherung für die Schraube 3 ist in dieser Ausgestaltung der Befestigungsvorrichtung 1 eine Verjüngung V des Innengewindes 7 der Buchse 2 vorgesehen, welche bei Eindrehen der Schraube 3 eine Verformung, insbesondere eine Quetschung des Schraubengewindes 5 und damit eine Verklemmung der Schraube 3, in der Buchse 2 sicherstellt.

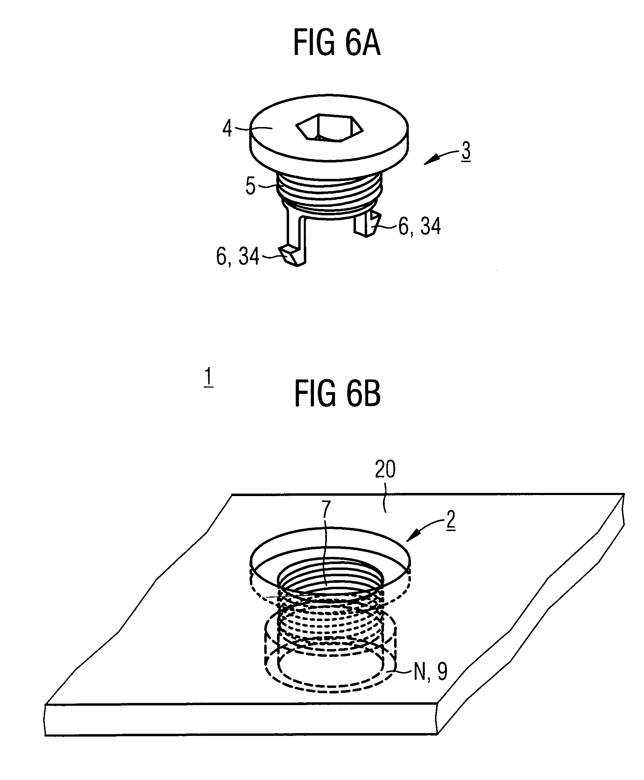

Eine weitere alternative Ausgestaltung ist in den FIG 6A und 6B gezeigt, bei der als Losdrehsicherung für die Schraube 3 in Form der schraubenseitigen Ausformungen 6 zwei oder mehrere hakenartige Fortsätze 34 vorgesehen sind. Bei ausreichend tiefem Eindrehen der Schraube 3 in die Buchse 2, die ein separates Bauteil sein oder, wie in FIG 6B dargestellt, als Bohrung in der Brennkammerinnenverkleidung 20 ausgeführt sein kann, rasten die hakenartigen Fortsätze 34 der Schraube 3 in der Buchse 2 im Sperrelement 9, z. B. einer Nut N, ein und verhindern so ein selbsttätiges Losdrehen der Schraube 3.

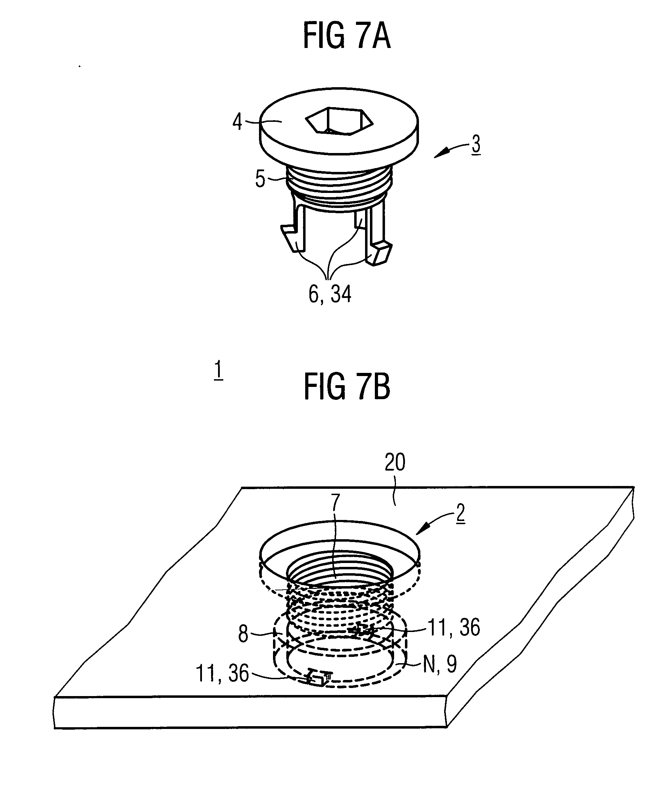

Als zusätzliche buchsenseitige Sicherung oder Verdrehsicherung 11 kann in der Wand 8 der Buchse 2 ein in FIG 7B gezeigter nasenförmiger Ansatz 36 vorgesehen sein, welcher ein Verdrehen der Schraube 3 in der Buchse 2 verhindert, welcher aber gleichzeitig ein zwanghaftes Losdrehen der Schraube 3 beispielsweise bei Wartungsarbeiten dadurch ermöglicht, dass sie die hakenartigen Fortsätze 34 der Schraube 3 abschert. Dabei wird lediglich die Schraube 3 zerstört und muss durch eine neue ersetzt werden. Als buchsenseitiges Sperrelement 9 dient die Nut N, in welche die hakenartigen Fortsätze 34 der Schraube 3 einrasten und so ein selbsttätiges Losdrehen der Schraube 3 verhindern.

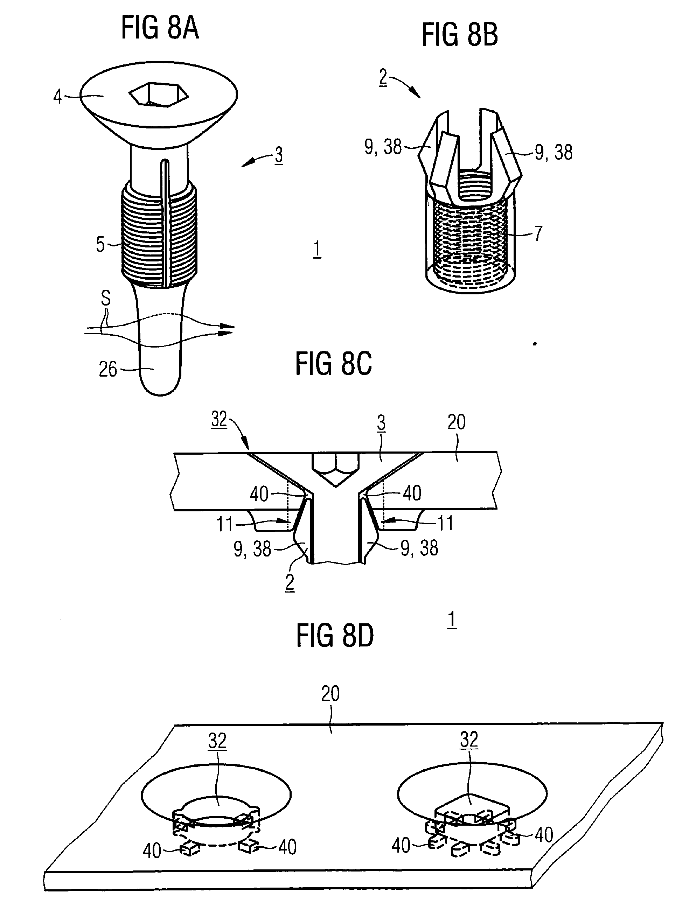

Eine weitere alternative Ausgestaltung für eine Befestigungsvorrichtung 1 ist in den FIG 8A bis 8D dargestellt. Die Schraube 3 kann auch bei dieser Ausgestaltung mit einer Verlängerung 26 zur konvektiven Kühlung ausgestattet sein. Die Buchse 2 ist an ihrem zur Schraube 3 hin offenen Ende mit einer Anzahl von Sperrelementen 9 in Form von zackenförmigen Fortsätzen 38, beispielsweise vier Fortsätzen in Art einer Zackenkrone, versehen. Die Schraube 3 ist hierbei im Bereich des Schraubengewindes 5 in Längsrichtung über die gesamte Länge mit einem Schlitz oder mit einer Nut N versehen, die zusätzlich als Losdrehsicherung dient.

FIG 8C zeigt die Befestigungsvorrichtung 1 nach FIG 8A und 8B im eingesetzten Zustand, z. B. in einer Wandöffnung 32 einer Brennkammerinnenverkleidung 20. FIG 8D zeigt im Detail die Form der Wandöffnung 32 der Brennkammerinnenverkleidung 20, wobei die Wandöffnung 32 je nach Art und Ausbildung einen runden oder mehreckigen Querschnitt aufweisen kann. Die durch die Befestigungsvorrichtung 1 zu verschließende Wandöffnung 32 weist eine Anzahl von nasenförmigen Öffnungen 40 in Form von Außennasen entlang ihrer Innenwand auf. Die Anzahl der nasenförmigen Öffnungen 40 entspricht der Anzahl der buchsenseitigen zackenförmigen Fortsätze 38. Dabei sind sowohl die nasenförmigen Öffnungen 40 als auch die zackenförmigen Fortsätze 38 jeweils in gleichmäßigem Abstand voneinander angeordnet.

Die nasenförmigen Öffnungen 40 dienen zur Aufnahme der zackenförmigen Fortsätze 38 bei der Montage der Buchse 2. Die Buchse 2 im montierten und die Schraube 3 im eingedrehten Zustand im Querschnitt zeigt FIG 8C. In diesem Zustand haben sich die zackenförmigen Fortsätze 38 in die nasenförmigen Öffnungen 40 eingefügt und bilden somit eine zuverlässige Verdrehsicherung 11.

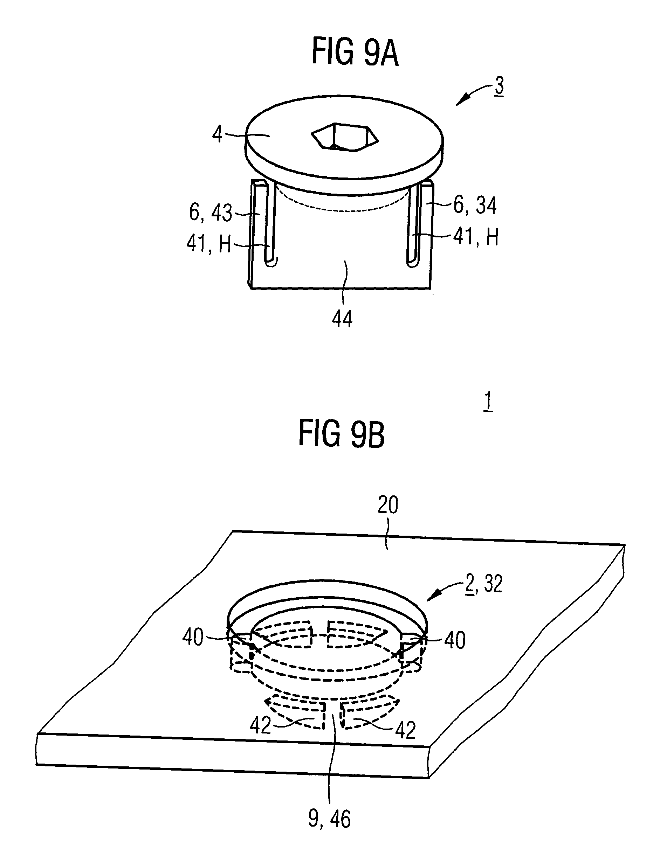

Die FIG 9A und 9B zeigen eine weitere alternative Ausgestaltung für eine Befestigungsvorrichtung 1. Die Schraube 3 ist in dieser Ausgestaltung nur noch im oberen Teil im Querschnitt rund, im unteren Teil weist sie einen flachen Querschnitt auf, wobei der runde Querschnitt in Längsrichtung der Schraube 3 allmählich in einen flachen übergeht. Am ihrem unteren, flachen Ende weist die Schraube 3 als Ausformungen 6 einen durch zwei u-förmige Fortsätze 43 verbreiterten Abschnitt 44 mit zwei schlitzförmigen Ausnehmungen 41, welche als Rast- oder Hakenelemente H dienen, auf. Die Ausnehmungen 41 ermöglichen die Verbiegbarkeit bzw. die Torsion des flachen Endes der Schraube 3, welche beim Einsetzen der Schraube 3 in die Buchse 2 erforderlich ist.

Als Buchse 2 ist eine Wandöffnung 32, z. B. eine Bohrung in der zu befestigenden Brennkammerinnenverkleidung 20 vorgesehen. Ähnlich wie bei der Buchse 2 der in den FIG 8A bis 8D gezeigten Ausgestaltung sind auch bei der in den FIG 9A bis 9B dargestellten Ausgestaltung nasenförmige Öffnungen 40 in der Wandöffnung 32, insbesondere zwei Öffnungen 40 vorgesehen. Diese nasenförmigen Öffnungen 40 dienen zur Aufnahme des flachen, verbreiterten Abschnitts 44 der Schraube 3 bei deren Montage, wobei die Montage folgendermaßen erfolgt:

Die Schraube 3 wird so in die Buchse 2 eingesetzt, dass ihr verbreiterter, flacher Abschnitt 44 in die Buchse 2 ragt und die u-förmigen Fortsätze 43 sich in die nasenförmigen Öffnungen 40 einfügen. Dabei wird die Schraube 3 vollständig in die Buchse 2 eingeführt, ihr Kopf 4 ragt also nicht mehr aus der Buchse 2 heraus. Durch eine Drehung um 90 Grad um ihre Längsachse wird die Schraube 3 nun arretiert: Während der Drehung werden die u-förmigen Fortsätze 43 durch an der Brennkammerinnenverkleidung 20 vorgegossenen und als buchsenseitige Sperrelemente 9 dienenden Rampen 42 geführt und dabei leicht verbogen, wobei das Verbiegen durch die schlitzförmigen Ausnehmungen 41 erleichtert wird. Nach Beendigung der Drehung um 90 Grad rasten die Fortsätze 43 in auch als buchsenseitige Sperrelemente 9 dienenden Ausnehmungen 46 zwischen den Rampen 42 ein und sind dort arretiert. Aufgrund der Form der Rampen 42 ist es ohne Gewaltanwendung nicht mehr möglich, die Schraube 3 zurück- oder weiterzudrehen, ohne sie dabei zu zerstören, weil sich die u-förmigen Fortsätze 43 in den Ausnehmungen 46 zwischen den Rampen 42 verklemmen oder verkrallen. Es ist allerdings möglich, beispielsweise bei Wartungsarbeiten, die Schraube 3 zwanghaft zu lösen. Sie wird dabei zerstört und muss ersetzt werden.

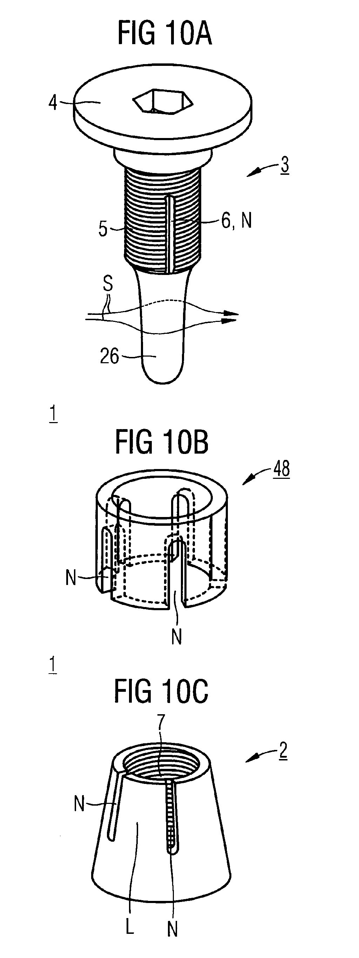

In den FIG 10A bis 10C ist eine weitere alternative Ausführungsform einer Befestigungsvorrichtung 1 dargestellt. Dabei sind sowohl die Schraube 3 als auch die Buchse 2 (auch Anzugsmutter genannt) mit Nuten N versehen. Darüber hinaus weist die Buchse 2 in Einschraubrichtung gesehen einen zunehmenden Außendurchmesser auf, der Innendurchmesser ist zur Aufnahme der Schraube 3 weitgehend konstant ausgeführt. Zusätzlich ist bei dieser Befestigungsvorrichtung 1 zwischen der Schraube 3 und der Buchse 2 ein Zwischenelement 48, wie in Figur 10B gezeigt, vorgesehen, welches als Hohlzylinder mit mehreren Nuten N in Art einer Zackenkrone ausgebildet ist.

Beim Eindrehen der Schraube 3 in die Buchse 2 wird die Schraube 3 zuerst in das Zwischenelement 48 geführt und mit diesen gemeinsam in die Buchse 2 geschraubt, wobei das Zwischenelement 48 einen Innendurchmesser aufweist, der in etwa dem kleinsten Außendurchmesser der Buchse 2 entspricht.

Durch den in Einschraubrichtung gesehen zunehmenden Außendurchmesser der Buchse 2 und den gleichbleibenden Innendurchmesser des Zwischenelements 48 erfolgt bei dessen Eindrehen in die Buchse 2 ein Eindrücken der in der Buchsenwand durch die Nuten N gebildeten Lippe L in die Buchsenöffnung hinein. Dies führt dazu, dass die Lasche oder Lippe L in der Nut N der eingedrehten Schraube 3 einrastet und ein Losdrehen der Schraube 3 sicher verhindert ist.

## Patentansprüche

1. Selbstsichernde Befestigungsvorrichtung (1) mit einer Buchse(2) und einer in die Buchse eindrehbaren Schraube (3) mit einem mehrstufig sich erweiternden Schraubenkopf (4), **dadurch gekennzeichnet, dass**
sich die Schraube (3) bei Drehung in einer der beiden Drehrichtungen in der Buchse (2) verkrallt.

2. Selbstsichernde Befestigungsvorrichtung nach Anspruch 1, **dadurch gekennzeichnet, dass**
ein Randbereich des Schraubenkopfes (4) eine Anzahl von Ausformungen (6) aufweist.

3. Selbstsichernde Befestigungsvorrichtung nach Anspruch 2, **dadurch gekennzeichnet, dass**
die Ausformungen (6) sägezahnartig sind.

4. Selbstsichernde Befestigungsvorrichtung nach einem der Ansprüche 1 bis 3,
bei der die Buchse (2) einen mit einem Innengewinde (7) versehenen Bereich (Bg) und einen Verkrallungsbereich (Bv) aufweist.

5. Selbstsichernde Befestigungsvorrichtung nach Anspruch 4, bei der der mit dem Innengewinde (7) versehene Bereich (Bg) und der Verkrallungsbereich (Bv) getrennt voneinander montierbar sind.

6. Selbstsichernde Befestigungsvorrichtung nach Anspruch 4 oder 5,
bei der der Verkrallungsbereich (Bv) der Buchse (2) eine Anzahl von Sperrelementen (9) aufweist, in denen sich die Schraube (3) bei Drehung in einer der beiden Drehrichtungen verkrallt.

7. Selbstsichernde Befestigungsvorrichtung nach Anspruch 6,
**dadurch gekennzeichnet, dass**
die Sperrelemente (9) als mit den Ausformungen (6) am Schraubenkopf (4) korrespondierende Elemente, insbesondere als schlitzförmige Ausnehmungen, ausgeführt sind.

8. Selbstsichernde Befestigungsvorrichtung nach Anspruch 7, bei der die Sperrelemente (9) als im Verkrallungsbereich (Bv) der Buchse (2) angebrachte, in die Buchsenöffnung ragende Ansätze (28, 36) ausgeführt sind.

9. Selbstsichernde Befestigungsvorrichtung nach Anspruch 8,
**dadurch gekennzeichnet, dass**
die Anzahl der schraubenseitigen Ausformungen (6) der Anzahl der buchsenseitigen Sperrelemente (9) entspricht.

10. Selbstsichernde Befestigungsvorrichtung nach Anspruch 8 oder 9,
**dadurch gekennzeichnet, dass**
sowohl die schraubenseitigen Ausformungen (6) als auch die buchsenseitigen Sperrelemente (9) jeweils gleichmäßig voneinander beabstandet sind.

11. Selbstsichernde Befestigungsvorrichtung nach einem der Ansprüche 1 bis 10,
**dadurch gekennzeichnet, dass**
die Schraube (3) eine Anzahl von Sperrelementen (9), insbesondere Hakenelementen (H), aufweist.

12. Selbstsichernde Befestigungsvorrichtung nach einem der Ansprüche 1 bis 11,
**dadurch gekennzeichnet, dass**
die Buchse (2) einen unrunden, exzentrischen Querschnitt aufweist.

13. Selbstsichernde Befestigungsvorrichtung nach einem der Ansprüche 1 bis 12,
**dadurch gekennzeichnet, dass**
sich der Durchmesser der Buchse (2) in Eindrehrichtung der Schraube (3) verringert.

14. Selbstsichernde Befestigungsvorrichtung nach einem der Ansprüche 1 bis 13,
**dadurch gekennzeichnet, dass**
die Buchse(2) eine Verdrehsicherung (11) aufweist.

15. Selbstsichernde Befestigungsvorrichtung nach Anspruch 14, bei der als Verdrehsicherung (11) in der Außenwand der Buchse (2) mindestens ein Ansatz (28) vorgesehen ist, der sich in eine korrespondierende, in einer Wandöffnung (32) angebrachte Ausnehmung (30) einfügt.

16. Selbstsichernde Befestigungsvorrichtung nach Anspruch 15, bei der mehrere Ausnehmungen (30) in der Wandöffnung (32) angeordnet sind, in welche sich die korrespondierenden Ansätze (28) der Buchse (2) als Verdrehsicherung (11) einfügen.

17. Selbstsichernde Befestigungsvorrichtung nach Anspruch 15 oder 16, bei der die Buchse (2) als Bohrung in einem zu befestigenden Teil ausgeführt ist.

18. Selbstsichernde Befestigungsvorrichtung nach einem der Ansprüche 1 bis 17,
**dadurch gekennzeichnet, dass**
die Schraube (3) innen kühlbar ist.

19. Selbstsichernde Befestigungsvorrichtung nach Anspruch 18,
**dadurch gekennzeichnet, dass**
die Schraube (3) geschlossen kühlbar ist.

20. Selbstsichernde Befestigungsvorrichtung nach Anspruch 18 oder 19,
**dadurch gekennzeichnet, dass**
die Schraube (3) mit einer die Kühlung unterstützenden Verlängerung(26) ausgestattet ist.

21. Gasturbinenbrennkammer (14) mit einer eine Brennkammerinnenverkleidung (20) haltenden selbstsichernden Befestigungsvorrichtung (1) nach einem der Ansprüche 1 bis 20.
